# EUROPEAN PATENT APPLICATION

(11) **EP 2 415 965 A2**
(43) Date of publication of application: **08.02.2012**
(21) Application number: 11175284.6
(22) Date of filing: 26.07.2011
(51) Int. Cl.: F01D 1/24, F02C 3/067, F02K 3/072, F01D 1/26

(54) **Gas turbine engine**

(30) Priority: 02.08.2010 GB 1012890
(71) Applicant: Rolls-Royce plc, London SW1E 6AT (GB)
(72) Inventor: Mackie, Kenneth, Derby, Derbyshire DE3 9BD (GB); Taylor, Mark, Derby, Derbyshire DE22 1AT (GB)
(74) Representative: White, Kevin Andrew

(57) **Abstract**

A gas turbine engine comprises, in flow series, a generator section and a free power turbine. The generator section includes one or more generator turbine stages. One or more respective generator drive shafts extend axially forwardly from the generator turbine stages to one or more corresponding compressor stages. The free power turbine includes a first turbine stage and a contra-rotating second turbine stage. The gas turbine engine further comprises a first drive shaft extending axially from the free power turbine to transmit rotational drive from the first turbine stage to a first propeller. The gas turbine engine further comprises a second drive shaft extending from the free power turbine coaxially with the first drive shaft to transmit contra-rotational drive from the second turbine stage to a contra-rotating second propeller.

## Description

The present invention relates to a gas turbine engine comprising, in flow series, a generator section and a free power turbine, and having contra-rotating propellers.

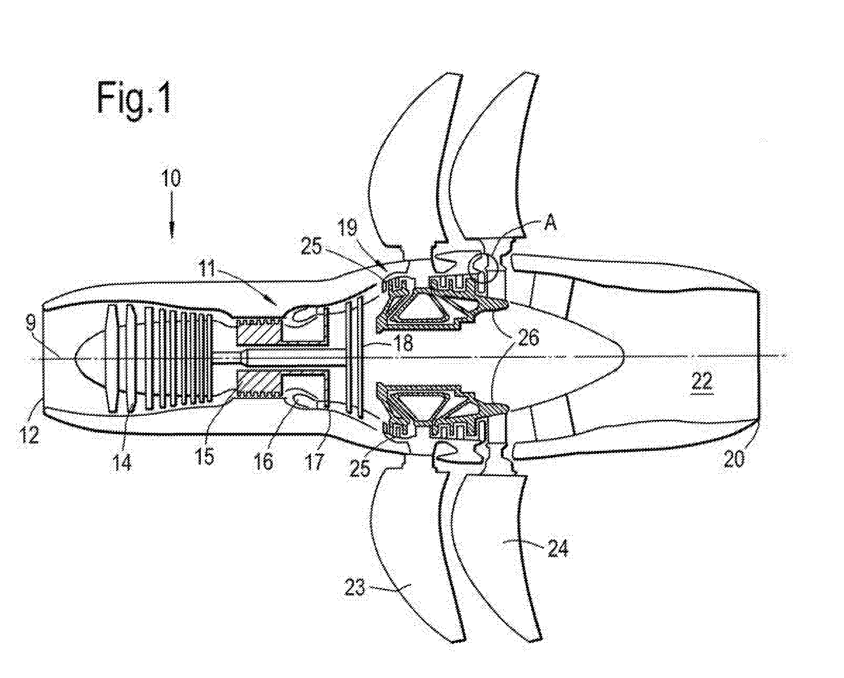

Referring to Figure 1, a twin-spooled, contra-rotating, free rotor, gas turbine engine is generally indicated at 10 and has a principal and rotational axis 9. The engine 10 comprises a core engine 11 having, in axial flow series, an air intake 12, a low pressure compressor 14 (LPC), a high-pressure compressor 15 (HPC), combustion equipment 16, a high-pressure turbine 17 (HPT), low pressure turbine 18 (LPT), a free power turbine 19 (FPT) and a core exhaust nozzle 20. A nacelle 21 generally surrounds the core engine and defines the intake 12 and nozzle 20 and a core exhaust duct 22. The engine also comprises two contra-rotating propellers 23, 24 attached to and driven by the FPT.

The gas turbine engine 10 works in a conventional manner so that air entering the intake 12 is accelerated and compressed by the LPC 14 and directed into the HPC 15 where further compression takes place. The compressed air exhausted from the HPC 15 is directed into the combustion equipment 16 where it is mixed with fuel and the mixture combusted. The resultant hot combustion products then expand through, and thereby drive the HPT 17, LPT 18 and FPT 19 before being exhausted through the nozzle 20 to provide some propulsive thrust. The HPT and LPT respectively drive the HPC and LPC by suitable interconnecting shafts, while respective contra-rotating stages 25, 26 of the FPT drive the propellers 23, 24. Each FPT stage comprises a plurality of rows of rotor blades, the rows of one stage alternating in the flow direction of the working gas with the rows of the other stage.

The propellers 23, 24, rather than the exhaust from the nozzle 20, normally provide the majority of the propulsive thrust of the engine.

In Figure 1, the propellers 23, 24 are positioned directly outboard of the FPT. To allow for the contra-rotation of the FPT stages 25, 26 while providing mechanical connection to the propellers, rotational to contra-rotational sealing (at the position marked A in Figure 1) is required at the outer wall of the FPT working gas annulus to prevent leakage of hot gases to the outside air. Sealing counter-rotating turbine stages is mechanically complex and difficult to achieve, and is generally detrimental to performance and mechanical integrity.

Further, a problem with counter-rotating open rotor engines is noise generation due to the wake from the first propeller interacting with the second propeller. This interaction, and hence the noise generation, can be reduced by increasing the axial distance between the propellers. However, in Figure 1 the propellers 23, 24 are driven directly from the FPT stages 25, 26. The axial extent of the FPT stages therefore limits the axial distance between the propellers, which in turn limits the scope for noise reduction.

Accordingly, the present invention provides a gas turbine engine comprising, in flow series, a generator section, a free power turbine and an exhaust duct;
wherein the generator section includes one or more generator turbine stages, one or more respective generator drive shafts extending axially forwardly from the generator turbine stages to one or more corresponding compressor stages; and
wherein the free power turbine includes a first turbine stage and a contra-rotating second turbine stage;
the gas turbine engine further comprising:
a rotational axis,
a first drive shaft extending axially rearwardly from the free power turbine to transmit rotational drive from the first turbine stage to a first propeller; and
a second drive shaft extending rearwardly from the free power turbine coaxially with the first drive shaft to transmit contra-rotational drive from the second turbine stage to a contra-rotating second propeller,
the first and second propellers are located radially outwardly of the exhaust duct.

By transmitting the rotational and contra-rotational drives from the first and second stages to the first and second propellers via the first and second drive shafts, it becomes possible to axially space the propellers from the free power turbine rather than having the propellers directly outboard of the free power turbine. The axial distance between the propellers can then be varied within a much greater range, enhancing the noise reduction possibilities of the engine.

Also, by avoiding having the propellers directly outboard of the free power turbine the propellers can be positioned in a more controlled temperature environment, and direct heat transfer from the turbine to the blades of the propellers or the blade retaining structures of the propellers can be reduced or eliminated. This can provide benefits with respect to the physical properties of the propellers, e.g. better strength at operational temperature, increased component life due to reduced thermal stresses, and improved propeller blade root bearing lubrication.

In addition, the need to provide rotational to contra-rotational sealing at the outer wall of the free power turbine working gas annulus can be avoided. In this way leakage of working gas from the free power turbine can be reduced or eliminated.

The engine may have any one or, to the extent that they are compatible, any combination of the following optional features.

Preferably, the first and second drive shafts extend axially rearwardly from the free power turbine to the first and second propellers. The first and the second propellers can then be located rearwardly of the free power turbine. That is, the propellers can have a "pusher" configuration. However, an alternative possibility is to extend the first and second drive shafts extend axially forwardly from the free power turbine to the first and second propellers. For example, the first and second drive shafts can extend through the generator drive shafts, to locate the first and the second propellers in a forward position, providing a "puller" configuration.

Typically, the first turbine stage comprises a plurality of first rows of turbine blades and the second turbine stage comprises a plurality of second rows of turbine blades which alternate, along the direction of working gas flow, with the first rows of turbine blades. The first and second stages can thus be "statorless" (i.e. without stator vanes between the alternating rows), which can provide operational benefits such as reduced engine length, reduced parts count, reduced weight and reduced cost relative to more conventional turbine designs.

Advantageously, the first drive shaft can transmit rotational drive from the first turbine stage to the first propeller and the second drive shaft can transmit contra-rotational drive from the second turbine stage to the second propeller without the passage of either drive through a gearbox. If only one drive were taken from the free power turbine, a gearbox would be needed (e.g. of epicyclic type) to produce separate rotational and contra-rotational drives for the propellers. Thus, by adopting an engine configuration with contra-rotating stages in the free power turbine, the additional weight, mechanical complexity, cost and potential unreliability of such a gearbox can be avoided.

The first drive shaft can be outside the second drive shaft, and the free power turbine may then further include one or more intershaft bearings which support the first drive shaft on the second drive shaft. In this way, the first turbine stage can be supported on the drive shaft of the second turbine stage.

Embodiments of the invention will now be described by way of example with reference to the accompanying drawings in which:
Figure 1 shows schematically a longitudinal cross-section through a twin-spooled, contra-rotating, free rotor, gas turbine engine; and
Figure 2 shows schematically a longitudinal cross-section through a free power turbine and propellers of a contra-rotating, free rotor, gas turbine engine.

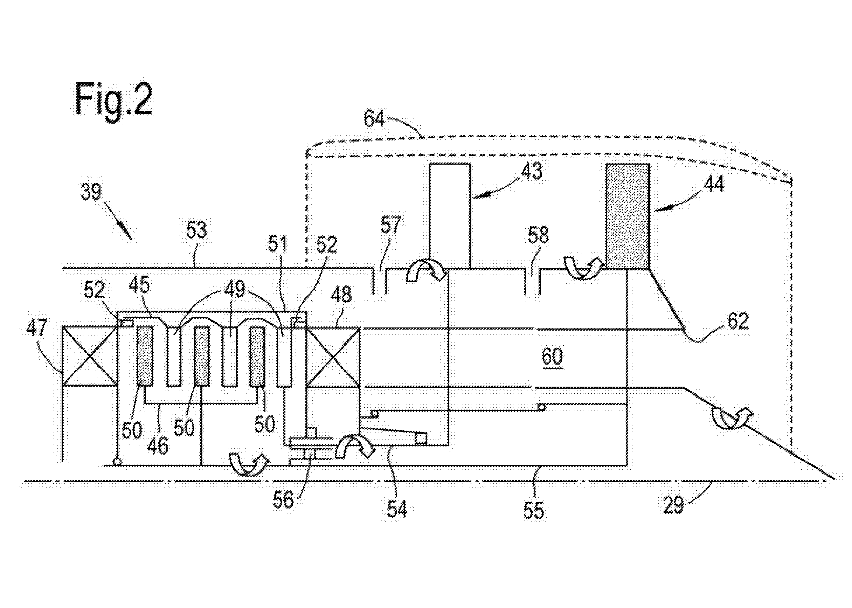

Figure 2 shows schematically a longitudinal cross-section through a free power turbine 39 (FPT) and first 43 and second 44 "pusher" propellers of a contra-rotating, free rotor, gas turbine engine having a principal and rotational axis 29. A generator section (not shown) forward of the FPT and comprising compressor and turbine stages and combustion equipment provides working gas to the FPT. The arrows in Figure 2 indicate the sense of rotation of different parts of the engine. The generator section includes a combustor, a turbine and a compressor arranged in a convention style as shown in figure 1; and may include additional turbines and compressors drivingly connected by respective shafts.

The FPT has a static inlet structure 47 and a static outlet structure 48, each typically comprising guide vanes which condition the flow and support the FPT rotors. Between these structures, the FPT has a first turbine stage 45 comprising a plurality of (in this case three) first rows 49 of turbine blades (while), and a second turbine stage 46 comprising a plurality of (again in this case three) second rows 50 of turbine blades (grey) which alternate, along the direction of working gas flow, with the first rows of turbine blades. The FPT is statorless, with the second turbine stage contra-rotating relative to the first turbine stage.

A static engine casing 51 houses the FPT, with static to rotor seals 52 sealing ends of the first 45 and second 46 turbine stages to the casing to reduce leakage from the working gas annulus. A nacelle 53 then surrounds the engine casing.

The first rows 49 of turbine blades are connected together outside the outboard wall of the working gas annulus. The drive from these rows is taken through the most rearward of the first rows via a first drive shaft 54 which extends axially rearwardly from the FPT 39 to the first propeller 43. The second rows 50 of contra-rotating turbine blades are connected together inside the inboard wall of the working gas annulus. The drive from these rows is taken via a second drive shaft 55 rearwardly from the FPT 39 to the contra-rotating second propeller 44. The first drive shaft is coaxial with and outside the second drive shaft, being supported on the second drive shaft by an intershaft bearing 56. The first propeller is located between the FPT and the second propeller, with nacelle-to-rotor 57 and rotor-to-rotor 58 split lines dividing these parts of the engine.

The engine of Figure 2 maintains advantages of the contra-rotating engine shown in Figure 1, i.e. it can be statorless, while overcoming some of the disadvantages of that engine. In particular, by taking the drive from the turbine stages 45, 46 to the propellers 43, 44 via the drive shafts 54, 55, the propellers do not need to located directly outboard of the FPT. There is thus much less restriction on the allowed spacing between the propellers, so that the distance between the propellers can be varied to reduce propeller to propeller interaction.

Further, no rotational to contra-rotational sealing is required at the outer wall of the FPT 39 working gas annulus, and the casing 51 can run continuously the entire length of the FPT, which improves the sealing of the annulus.

Relative to engines without contra-rotating FPT stages, the contra-rotation of the propellers 43, 44 can be achieved without installing a gearbox. The cost, complexity, weight and potential unreliability of a gearbox can thus be avoided.

The gas turbine engine also includes an exhaust duct 60 which is arranged to exhaust spent working gas from the gas generator and FPT. The exhaust duct terminates with an exhaust nozzle 62. The exhaust duct 60 is located radially inwardly of the propellers 43, 44. The exhaust nozzle may be located axially rearwardly of the rearmost propeller 44. It is advantageous to exhaust the working gases in this manner to avoid exhausting the hot gases in front of the propellers which can necessitate special cooling requirements. Additionally, by locating the propellers axially rearward of the FPT and radially outboard of the exhaust duct, the propellers and their fixtures can be installed in a lower temperature environment with the benefits of improved material properties, lower material costs and reduced cooling requirements.

Thus one significant advantage of the gas turbine engine is the axial location of the propellers, which is radially outwardly of the exhaust duct. More specifically the axial location of the propellers is between the FPT and the exhaust nozzle. This configuration conveniently allows the propellers 43, 44 to be spaced apart to minimise noise generated by wake interactions between propellers, while also optimising thrust generated and engine operability such as surge margins.

It should be appreciated that this gas turbine engine is an 'open rotor' configuration and its propellers 43, 44 are unducted. In another embodiment a nacelle 64 (shown dashed) is provided and which surrounds the propellers 43, 44.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A gas turbine engine comprising, in flow series, a generator section, a free power turbine (39) and an exhaust duct (62);
wherein the generator section includes one or more generator turbine stages, one or more respective generator drive shafts extending axially forwardly from the generator turbine stages to one or more corresponding compressor stages; and
wherein the free power turbine includes a first turbine stage (45) and a contra-rotating second turbine stage (46);
the gas turbine engine further comprising:
a rotational axis (29),
a first drive shaft (54) extending axially rearwardly from the free power turbine to transmit rotational drive from the first turbine stage to a first propeller (43); and
a second drive shaft (55) extending rearwardly from the free power turbine coaxially with the first drive shaft to transmit contra-rotational drive from the second turbine stage to a contra-rotating second propeller (44),
the first and second propellers are located radially outwardly of the exhaust duct.

2. A gas turbine engine according to claim 1, wherein the exhaust duct terminates with an exhaust nozzle 62; the first and second propellers are located between the free power turbine and the exhaust nozzle.

3. A gas turbine engine according to claim 1 or 2, wherein the first turbine stage comprises a plurality of first rows (49) of turbine blades and the second turbine stage comprises a plurality of second rows (50) of turbine blades which alternate, along the direction of working gas flow, with the first rows of turbine blades.

4. A gas turbine engine according to any one of the previous claims, wherein the first drive shaft transmits rotational drive from the first turbine stage to the first propeller and the second drive shaft transmits contra-rotational drive from the second turbine stage to the second propeller without the passage of either drive through a gearbox.

5. A gas turbine engine according to any one of the previous claims, wherein the first drive shaft is outside the second drive shaft, and the free power turbine further includes one or more intershaft bearings (56) which support the first drive shaft on the second drive shaft.

6. A gas turbine engine according to any one of the previous claims, wherein the engine is an open rotor.

7. A gas turbine engine according to any one of claims 1-5, wherein the first and second propellers are surrounded by a nacelle (64).
